# EUROPEAN PATENT SPECIFICATION

(11) **EP 3 475 080 B1**
(45) Date of publication and mention of the grant of the patent: **05.10.2022**
(21) Application number: 17816279.8
(22) Date of filing: 23.06.2017
(51) Int. Cl.: B32B 15/01, A47J 36/00, A47J 36/02, A47J 27/00, A47J 37/10

(54) **NICKEL-FREE METALLIC COOKWARE WITH GOOD CORROSION PROPERTIES AND THE METHOD OF MAKING THE SAME**
NICKELFREIES METALLISCHES KOCHGESCHIRR MIT GUTEN KORROSIONSEIGENSCHAFTEN UND VERFAHREN ZUR HERSTELLUNG DAVON
USTENSILE DE CUISINE MÉTALLIQUE SANS NICKEL AYANT DE BONNES PROPRIÉTÉS DE RÉSISTANCE À LA CORROSION ET SON PROCÉDÉ DE FABRICATION

(30) Priority: 24.06.2016 US 201662354337 P
(43) Date of publication of application: 01.05.2019
(73) Proprietor: EMS ENGINEERED MATERIALS SOLUTIONS, LLC, Attleboro MA 02703 (US)
(72) Inventor: RANGANATHAN, Rajesh, Attleboro, MA 02703 (US); LAGRECA, Brucene, Cumberland, RI 02864 (US)
(74) Representative: J A Kemp LLP
(86) International application number: PCT/US2017/038967
(87) International publication number: WO 2017/223423

(56) References cited:
- WO-A1-2005/018393
- US-A- 5 952 112
- US-A1- 2015 354 023
- US-B1- 6 267 830
- US-B2- 7 960 034
- US-B2- 8 133 596
- US-B2- 8 133 596
- US-B2- 8 420 225
- REBECCA WOOD: A Buyers Guide to Stainless Steel Cookware, 3 February 2015 (2015-02-03), XP055586606, Retrieved from the Internet: URL:http://www.rebeccawood.com/health/cook ware/a-buyers-guide-to-stainless-steel-coo kware [retrieved on 2017-08-24]
- Stainless grades and properties, 16 April 2016 (2016-04-16), page 1, XP055586612, Retrieved from the Internet: URL:https://web.archive .org/web/20 160416123725/ http://www.imoa.info/molybdenum- uses/molybdenum-grade-stainless-steels/ste el-grades.php [retrieved on 2017-08-24]

## Description

The present invention relates generally to a method for producing metallic cookware.

Cookware can be made of various materials, including metallic materials. For example, aluminum, cast iron, carbon steel, copper, stainless steel, and the like have been used in coatings or layers for the cooking surface (i.e., the surface in contact with food). However, there are drawbacks for using these metals in cookware on cooking surfaces. Both cast iron and carbon steel corrode easily, and are hard to clean. Aluminum can leach into a person's food, and has been linked to Alzheimer's disease. Copper is easily dissolvable and can be absorbed into cooked food, which can cause vomiting and diarrhea.

As a result, stainless steels are widely used for the cooking surface of the cookware. Most stainless steels used in commercial and residential cookware are austenitic stainless steels given that they are easily formable and corrosion resistant. Austenitic stainless steel includes some percentage of nickel, which greatly increases the formability of the steel. Stainless steel has many desirable qualities, including anti-corrosion properties, durability, affordability, and deep draw capability.

However, stainless steel cooking surfaces, including austenitic stainless steel, are readily attacked by organic acids, particularly at cooking temperatures. Hot natural salt solutions are one of the severe environments that easily pit austenitic stainless steels, including S304. This type of corrosion releases elements such as iron, chromium and nickel from the cookware itself into the food which can be ingested by the consumer. For example, an austenitic stainless steel such as S304 contains between 8-10% nickel. It has been recognized that exposure to nickel compounds can have adverse effects on human health, among which nickel allergy in the form of contact dermatitis is the most common and well-known reaction. US 8,133,596 B2 and WO 2005/018393 A1 disclose cookware.

Therefore, there is a need for developing commercial cookware that includes a stainless steel cooking surface absent of nickel.

The present invention relates generally to a method for producing a nickel-less cooking surface in metallic cookware. More particularly, this invention relates to a method of using a roll bonding process to generate a nickel-less cooking surface for cookware made of discrete layers of different metals. In an aspect, the invention is directed at a nickel-less cooking surface having good corrosion properties. The cooking surface comprises stainless steel.

According to the invention a method for creating a multi-layer clad strip for use in a metallic cookware comprises the features of claim 1. The nickel-free stainless steel can have a sufficient corrosion resistant characteristic. In an aspect, the stainless steel is selected from stainless steel having a PREN higher than 10. In some instances, the stainless steel has a PREN higher than 18. In other aspects, the stainless steel has a PREN higher than 24. The stainless steel can comprise a ferritic stainless steel.

In an aspect, the second metallic material is selected from metals that have good thermal properties and the third metallic material is selected from a metal that is rigid. In an aspect, the second metallic material can comprise copper, titanium, or aluminum. In an aspect, the third metallic material comprises stainless steel. The multi-layer clad strip can be cold roll bonded.

The invention is also directed at a multi-layer clad strip for use in metallic cookware in accordance with claim 10. In an aspect, the nickel-free stainless steel is ferritic stainless steel. In some aspects, the ferritic stainless steel has a PREN higher than 18.7. In an aspect, the ferritic stainless steel is S444.

In an aspect, the second metal of the multi-layer clad strip has a better heat distribution compared to the first layer. In other aspects, the second metal is lighter than the stainless steel of the first layer. The third metal can be stainless steel.

These and other aspects of the invention can be realized from reading and understanding of the detailed description and the figures.

FIG. 1 illustrates a schematic representation of a roll bonding operation according to an aspect of the present invention.

FIGS. 2-3 illustrate schematic representations of multi-layer components made of multiple metallic materials. FIG. 2 shows an example useful for understanding the invention, and FIG. 3 shows an embodiment of the invention.

A new process for creating metallic cookware with a nickel-free cooking surface is described herein. The present invention is directed at a method for producing a nickel-free cooking surface for metallic cookware, and the product produced therein.

The cookware is formed from a multi-layer clad strip. The clad strip used to make the metallic cookware is formed from a plurality of metallic materials, wherein the multi-layer clad strip includes a top layer made for a cooking surface that is free of nickel and at least two other layers of metallic material. In such instances, the cooking surface needs to be corrosion resistant that does not easily corrode under common cooking acids/bases and salts. The cooking surface is formed from stainless steel. The stainless steel cooking surface is formed absent of nickel (i.e., nickel-less stainless steel).

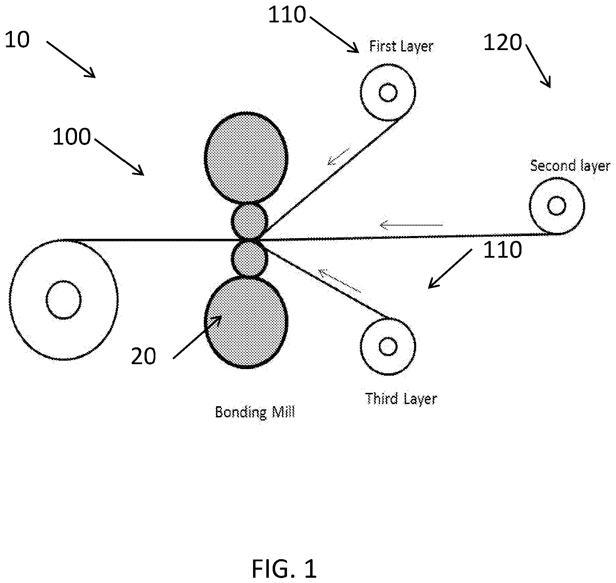

In an aspect, a roll bonding process 10 (see FIG. 1) is used to generate a multi-layer clad strip 100. As discussed above, the multi-layer clad strip 100 includes at least one layer of nickel-free metal 110 (first layer) used for the cooking surface, and at least one other metal 120, 130 (second and third layers) to form additional layers in the multi-layer clad strip 100. The multi-layer clad strip 100 includes at least one layer of stainless steel 110 that does not contain nickel with at least two other layers of material. For example, as shown in FIG. 1, three layers of metallic material 110, 120, 130 are bonded together. In an aspect, the bonding can be performed by a bonding mill 20. Bonding can include, but is not limited to, cold roll bonding, warm roll bonding, and hot roll bonding, and various other cladding methods known in the art. In this example, the first layer 110, intended to be the cooking surface, is nickel-free. In an aspect, the nickel-free material is considered to be nickel-free if it contains less than approximately 0.5% nickel.

In an exemplary aspect, the first layer is a nickel-free stainless steel 110. In such instances, the nickel-free stainless steel 110 can have a sufficient corrosion resistant characteristic. The type of nickel-free stainless steel 110 can be selected based upon its Pitting Resistance Equivalent Numbers (PREN). The higher the PREN, the better the corrosion characteristic of the stainless steel. Using the PREN of the stainless steel allows the correct stainless steel to be selected based upon the application. That is, if the cookware is going to be used in very corrosive conditions, a stainless steel with a high PREN will be selected. In cases where corrosion is not an issue, the PREN of the stainless steel does not need to be as high.

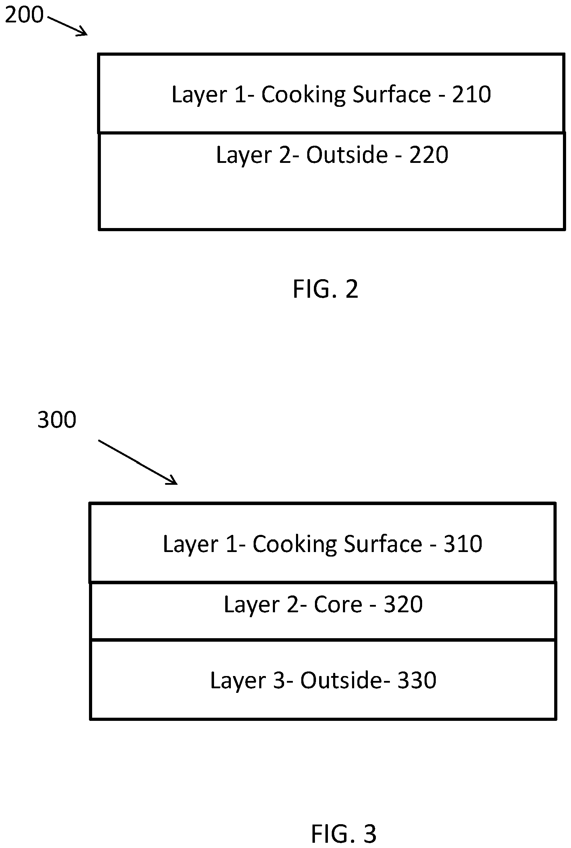

In an aspect, the first layer 110 is a ferritic stainless steel. Ferritic stainless steel can be used as the cooking surface of the metallic cookware because it is essentially nickel-free in comparison to austenitic, martensitic, and other types of stainless steel. These types of stainless steel contain a higher amount of nickel when compared to ferritic stainless steel. The other layers 120, 130 (i.e., second and third layers) of the metallic clad strip 100 can be of various other materials commonly used in metallic cookware. For example, the core layer 120 can be aluminum and/or copper for good thermal properties, and the external non-cooking surface 130 can be stainless steel and/or copper for rigidity and appearance purposes. While FIG. 1 illustrates a multi-layer clad strip 100 comprising three layers 110, 120, 130, other embodiments can form a multi-layer clad strip having various numbers of layers. For example, there can be three (FIG. 3), four, or more layers. However, the cooking layer 110 of the multi-layer clad strip 100 needs to be comprised of a nickel-free metal. The cooking layer comprises nickel-free stainless steel.

In an aspect, the selection of the type of stainless steel for the cooking surface is performed on the basis of PRENs combined with the amount of nickel found in the stainless steel. The PREN gives a basic pitting and corrosion resistance for different stainless steels. The higher the PREN, the more resistant the stainless steel is to corrosion. After selecting a PREN number, a stainless steel with very low amount of nickel can be selected. In an aspect, after ensuring the stainless steel has less than 0.5% Ni, a stainless steel with a PREN higher than S304 is selected, as shown in Table 1. By picking a stainless steel having no nickel and with a high PREN number generally assures a better corrosion performance than the universally used S304 stainless which usually pits in a hot salt water environment and leeches nickel. In an aspect, stainless steels with low PRENs and essentially nickel free can be chosen, as long as the corrosion level is not an essential function for the resulting material.

Referring to Table 1, S304 contains approximately 18.1% by weight chromium, no Molybdenum, 8.4% nickel, and .04% nitrogen, with a PREN of 18.7. S316 has a higher PREN (24.2) but has nickel over 10%. In comparison, the ferritic stainless steels all have essentially no nickel. S409 has a PREN of 11.7, S430 has a PREN of 16.7, and S444 has a PREN of 25. Other stainless steels than those discussed above and shown in Table I can be selected for the cooking surface, but it preferred that the stainless steel have a high PREN and essentially no nickel.

**Table 1:PREN numbers for some standard stainless steel materials**

| **Type** | **Metal** | **Cr** | **Mo** | **Ni** | **N** | **(PREN)** |
|---|---|---|---|---|---|---|
| **Austenitic** | **304** | **18.1** | **0** | **8.4** | **0.04** | **18.7** |
| **Austenitic** | **316** | **16.5** | **2.15** | **10.2** | **0.04** | **24.2** |
| **Ferritic** | **409** | **11.5** | **0** | **0** | **0.01** | **11.7** |
| **Ferritic** | **430** | **16.5** | **0** | **0** | **0.01** | **25.0** |
| **Ferritic** | **444** | **17.7** | **2.1** | **0** | **0.02** | **25.0** |

In an aspect, the other layer(s) (i.e., layers other than the cooking surface) of the multi-layer clad strip can include any metal. In an exemplary aspect, the other layers can include copper (Cu) or aluminum (Al) to increase thermal properties and/or to make lighter-weight cookware. In an aspect, the multi-layer strip can include at least one layer of nickel-free stainless steel for the cooking surface along with multiple layers of core metal surrounded by another stainless steel layer meant to be the outer layer to add to the sturdiness and appearance of the cookware. In an aspect, the core metal can include both Aluminum and Copper with another stainless steel on the outer layer. The outer non-food contact layer of stainless steel does not necessarily need to be nickel-free, but it is desirable that the stainless steel contain the least amount of nickel as possible.

Cladding the multiple layers together and forming cookware with the nickel-free stainless steel on the inside of the vessel (cooking surface) creates a cookware that has a nickel-free cooking surface with higher corrosion resistance. For example, FIGS. 2 and 3 show two multi-layer clad strips 200, 300 respectively where the cooking surface (Layer One) 210, 310 is a nickel-free stainless steel. The multi-layer clad strip 200 in FIG. 2 only has two layers, with the cooking surface (Layer One) 210 and an outside layer (Layer Two) 220. The other strip 300 has three layers, a cooking surface (Layer One) 310, a core layer (Layer Two) 320, and an outer layer (Layer Three) 330. Such a system does not need to be balanced on Layer One 310 and layer Three 330. Layer Three 330 can be thicker or thinner than Layer One 310 and can also be of a different grade of stainless steel, such as austenitic, etc. The primary function of the core layer 320 is improved heat distribution compared to stainless steel and/or weight lightening. The core layer 320 can be but not necessarily limited to aluminum, copper, or multiple layers of aluminum and copper, titanium etc. In an aspect, the characteristics of desirable outside layer materials include deep drawability, magnetizable for induction compatibility, and appearance, all qualities that stainless steel, steel, copper, aluminum and the like include.

Having thus described exemplary embodiments of a method to produce metallic composite material, it should be noted by those skilled in the art that the within disclosures are exemplary only and that various other alternatives, adaptations, and modifications may be made within the scope of the appended claims.

## Claims

1. A method for creating a multi-layer clad strip (300) for use in a metallic cookware, the method comprising:
a. selecting a first metallic material, wherein the first metallic material is a nickel-free stainless steel;
b. selecting a second metallic material to be bonded to the first metallic material, wherein the second metallic material is different from the first metallic material;
c. selecting a third metallic material to be bonded to the second metallic material, wherein the third metallic material is different from the second metallic material;
d. bonding the first metallic material and the second metallic material to one another, wherein the first metallic material forms a first layer (310) and is positioned to have a surface be a cooking surface for the metallic cookware, and the second metallic material forms a second layer (320) adjacent the first layer, and further bonding the third metallic material to the second metallic material opposite the first metallic material such that the second layer forms a core of the multi-layer clad strip.

2. The method of claim 1, wherein the stainless steel has a sufficient corrosion resistant characteristic.

3. The method of claim 2, wherein the stainless steel is selected from stainless steel having a PREN higher than 10.

4. The method of claim 3, wherein the stainless steel has a PREN higher than 18.

5. The method of claim 4, wherein the stainless steel has a PREN higher than 24.

6. The method of claim 2, wherein the stainless steel comprises a ferritic stainless steel.

7. The method of claim 1, wherein the second metallic material is selected from metals that have good thermal properties and the third metallic material is selected from a metal that is rigid.

8. The method of claim 7, wherein the second metallic material comprises copper or aluminum, optionally wherein the third metallic material comprises stainless steel.

9. The method of claim 1, wherein the bonding comprises cold roll bonding.

10. A multi-layer clad strip (300) for use in metallic cookware, the multi-layer clad strip (300) comprising:
a. a first layer (310) comprising a nickel-free stainless steel, wherein a surface of the first layer (310) is a nickel-free cooking surface;
b. a second layer (320) comprising a second metal, wherein the second metal is different from the nickel-free stainless steel of the first layer (310), the second layer (320) bonded to the first layer (310); and
c. a third layer (330) comprising a third metal different from the second metal of the second layer (320), the third layer (330) bonded to the second layer (320) opposite the first layer (310) so the second layer (320) forms a core for the multi-layer clad strip (300).

11. The multi-layer clad strip (300) of claim 10, wherein the nickel-free stainless steel is ferritic stainless steel, optionally wherein the ferritic stainless steel has a PREN higher than 18.7.

12. The multi-layer clad strip (300) of claim 11, wherein the ferritic stainless steel is S444.

13. The multi-layer clad strip (300) of claim 10, wherein the second metal has a better heat distribution compared to the first layer (310), optionally wherein the second metal is lighter than the stainless steel of the first layer (310).

14. The multi-layer clad strip (300) of claim 10, wherein the third metal comprises stainless steel.

15. The multi-layer clad strip (300) of any of claims 10 to 14, consisting only of the first layer, the second layer, and the third layer.

## Patentansprüche

1. Verfahren zum Erzeugen eines mehrschichtigen plattierten Streifens (300) zur Verwendung bei metallischem Kochgeschirr, wobei das Verfahren Folgendes umfasst:
a. Auswählen eines ersten metallischen Materials, wobei das erste metallische Material nickelfreier Edelstahl ist;
b. Auswählen eins zweiten metallischen Materials, das mit dem ersten metallischen Material verbunden werden soll, wobei das zweite metallische Material anders als das erste metallische Material ist;
c. Auswählen eines dritten metallischen Materials, das mit dem zweiten metallischen Material verbunden werden soll, wobei das dritte metallische Material anders als das zweite metallische Material ist;
d. Verbinden des ersten metallischen Materials und des zweiten metallischen Materials miteinander, wobei das erste metallische Material eine erste Schicht (310) bildet und so positioniert ist, dass eine Oberfläche eine Kochfläche für das metallische Kochgeschirr ist, und das zweite metallische Material eine zweite Schicht (320) benachbart zu der ersten Schicht bildet, und ferner Verbinden des dritten metallischen Materials mit dem zweiten metallischen Material gegenüber dem ersten metallischen Material, sodass die zweite Schicht einen Kern des mehrschichtigen plattierten Streifens bildet.

2. Verfahren nach Anspruch 1, wobei der Edelstahl eine ausreichend korrosionsbeständige Eigenschaft aufweist.

3. Verfahren nach Anspruch 2, wobei der Edelstahl ausgewählt ist aus Edelstahl mit einem PREN-Wert von über 10.

4. Verfahren nach Anspruch 3, wobei der Edelstahl einen PREN-Wert von über 18 hat.

5. Verfahren nach Anspruch 4, wobei der Edelstahl einen PREN-Wert von über 24 hat.

6. Verfahren nach Anspruch 2, wobei der Edelstahl einen ferritischen Edelstahl umfasst.

7. Verfahren nach Anspruch 1, wobei das zweite metallische Material ausgewählt ist aus Metallen, die gute thermische Eigenschaften haben, und das dritte metallische Material ausgewählt ist aus einem Metall, das hart ist.

8. Verfahren nach Anspruch 7, wobei das zweite metallische Material Kupfer oder Aluminium umfasst, wobei optional das dritte metallische Material Edelstahl umfasst.

9. Verfahren nach Anspruch 1, wobei das Verbinden Kaltwalzplattieren umfasst.

10. Mehrschichtiger plattierter Streifen (300) zur Verwendung bei metallischem Kochgeschirr, wobei der mehrschichtige plattierte Streifen (300) Folgendes umfasst:
a. eine erste Schicht (310), umfassend nickelfreien Edelstahl, wobei eine Oberfläche der ersten Schicht (310) eine nickelfreie Kochfläche ist;
b. eine zweite Schicht (320), umfassend ein zweites Metall, wobei das zweite Metall anders als der nickelfreie Edelstahl der ersten Schicht ist (310), und wobei die zweite Schicht (320) mit der ersten Schicht (310) verbunden ist; und
c. eine dritte Schicht (330), umfassend ein drittes Metall, das anders als das zweite Metall der zweiten Schicht (320) ist, wobei die dritte Schicht (330) mit der zweiten Schicht (320) gegenüber der ersten Schicht (310) verbunden ist, sodass die zweite Schicht (320) einen Kern für den mehrschichtigen plattierten Streifen (300) bildet.

11. Mehrschichtiger plattierter Streifen (300) nach Anspruch 10, wobei der nickelfreie Edelstahl ferritischer Edelstahl ist, wobei optional der ferritische Edelstahl einen PREN-Wert von über 18,7 hat.

12. Mehrschichtiger plattierter Streifen (300) nach Anspruch 11, wobei der ferritische Edelstahl S444 ist.

13. Mehrschichtiger plattierter Streifen (300) nach Anspruch 10, wobei das zweite Metall eine bessere Wärmeverteilung im Vergleich zu der ersten Schicht (310) aufweist, wobei optional das zweite Metall leichter als der Edelstahl der ersten Schicht (310) ist.

14. Mehrschichtiger plattierter Streifen (300) nach Anspruch 10, wobei das dritte Metall Edelstahl umfasst.

15. Mehrschichtiger plattierter Streifen (300) nach einem der Ansprüche 10 bis 14, der nur aus der ersten Schicht, der zweiten Schicht und der dritten Schicht besteht.

## Revendications

1. Procédé de création d'une bande de revêtement multicouche (300) pour une utilisation dans un ustensile de cuisson métallique, le procédé comprenant :
a. la sélection d'un premier matériau métallique, dans lequel le premier matériau métallique est un acier inoxydable sans nickel ;
b. la sélection d'un deuxième matériau métallique à lier au premier matériau métallique, dans lequel le deuxième matériau métallique est différent du premier matériau métallique ;
c. la sélection d'un troisième matériau métallique à lier au deuxième matériau métallique, dans lequel le troisième matériau métallique est différent du deuxième matériau métallique ;
d. la liaison du premier matériau métallique et du deuxième matériau métallique l'un à l'autre, dans lequel le premier matériau métallique forme une première couche (310) et est positionné de manière à avoir une surface qui est une surface de cuisson pour l'ustensile de cuisson métallique, et le deuxième matériau métallique forme une deuxième couche (320) adjacente à la première couche, et en outre la liaison du troisième matériau métallique au deuxième matériau métallique à l'opposé du premier matériau métallique si bien que la deuxième couche forme une âme de la bande de revêtement multicouche.

2. Procédé selon la revendication 1, dans lequel l'acier inoxydable a une caractéristique de résistance à la corrosion suffisante.

3. Procédé selon la revendication 2, dans lequel l'acier inoxydable est sélectionné à partir d'acier inoxydable ayant un PREN supérieur à 10.

4. Procédé selon la revendication 3, dans lequel l'acier inoxydable a un PREN supérieur à 18.

5. Procédé selon la revendication 4, dans lequel l'acier inoxydable a un PREN supérieur à 24.

6. Procédé selon la revendication 2, dans lequel l'acier inoxydable comprend un acier inoxydable ferritique.

7. Procédé selon la revendication 1, dans lequel le deuxième matériau métallique est sélectionné parmi des métaux qui ont de bonnes propriétés thermiques et le troisième matériau métallique est sélectionné à partir d'un métal qui est rigide.

8. Procédé selon la revendication 7, dans lequel le deuxième matériau métallique comprend du cuivre ou de l'aluminium, facultativement dans lequel le troisième matériau métallique comprend de l'acier inoxydable.

9. Procédé selon la revendication 1, dans lequel la liaison comprend une liaison par laminage à froid.

10. Bande de revêtement multicouche (300) pour une utilisation dans un ustensile de cuisson métallique, la bande de revêtement multicouche (300) comprenant :
a. une première couche (310) comprenant un acier inoxydable sans nickel, dans laquelle une surface de la première couche (310) est une surface de cuisson sans nickel ;
b. une deuxième couche (320) comprenant un deuxième métal, dans laquelle le deuxième métal est différent de l'acier inoxydable sans nickel de la première couche (310), la deuxième couche (320) étant liée à la première couche (310) ; et
c. une troisième couche (330) comprenant un troisième métal différent du deuxième métal de la deuxième couche (320), la troisième couche (330) étant liée à la deuxième couche (320) à l'opposé de la première couche (310) de sorte que la deuxième couche (320) forme une âme pour la bande de revêtement multicouche (300).

11. Bande de revêtement multicouche (300) selon la revendication 10, dans laquelle l'acier inoxydable sans nickel est un acier inoxydable ferritique, facultativement dans laquelle l'acier inoxydable ferritique a un PREN supérieur à 18,7.

12. Bande de revêtement multicouche (300) selon la revendication 11, dans laquelle l'acier inoxydable ferritique est S444.

13. Bande de revêtement multicouche (300) selon la revendication 10, dans laquelle le deuxième métal a une meilleure distribution de chaleur par rapport à la première couche (310), facultativement dans laquelle le deuxième métal est plus léger que l'acier inoxydable de la première couche (310).

14. Bande de revêtement multicouche (300) selon la revendication 10, dans laquelle le troisième métal comprend de l'acier inoxydable.

15. Bande de revêtement multicouche (300) selon l'une quelconque des revendications 10 à 14, constituée uniquement de la première couche, de la deuxième couche et de la troisième couche.
